# EUROPÄISCHE PATENTSCHRIFT

(11) **EP 2 670 503 B1**
(45) Veröffentlichungstag und Bekanntmachung des Hinweises auf die Patenterteilung: **27.12.2017**
(21) Anmeldenummer: 12701999.0
(22) Anmeldetag: 25.01.2012
(51) Int. Cl.: B01D 27/08, B01D 27/10, B01D 35/153, B01D 35/16

(54) **FILTERSYSTEM FÜR MOTORÖL EINER BRENNKRAFTMASCHINE UND WECHSELFILTER EINES FILTERSYSTEMS**
FILTERING SYSTEM FOR MOTOR OIL OF AN INTERNAL COMBUSTION ENGINE, AND REPLACEABLE FILTER OF A FILTERING SYSTEM
SYSTÈME DE FILTRE À HUILE D'UN MOTEUR À COMBUSTION INTERNE ET FILTRE REMPLAÇABLE D'UN SYSTÈME DE FILTRE

(30) Priorität: 31.01.2011 DE 102011009926
(43) Veröffentlichungstag der Anmeldung: 11.12.2013
(73) Patentinhaber: MANN+HUMMEL GmbH, 71636 Ludwigsburg (DE)
(72) Erfinder: SCHRECKENBERGER, Dieter, 71729 Erdmannhausen (DE); EPLI, Sven, 74078 Heilbronn (DE); WILDERMUTH, Andreas, 71672 Marbach (DE)
(86) Internationale Anmeldenummer: PCT/EP2012/051168
(87) Internationale Veröffentlichungsnummer: WO 2012/104185

(56) Entgegenhaltungen:
- WO-A1-2004/087290
- DE-A1- 3 344 568
- DE-A1-102005 057 710
- DE-U1-202007 006 385
- FR-A1- 2 911 797

## Beschreibung

### Technisches Gebiet

Die Erfindung betrifft ein Filtersystem für Motoröl einer Brennkraftmaschine, insbesondere eines Kraftfahrzeugs, mit einem Filterkopf, welcher eine Zuleitung für zu filtrierendes Motoröl und eine Ableitung für filtriertes Motoröl aufweist, und einem Wechselfilter, welcher lösbar mittels einer Dreh- und/oder Steckverbindung an dem Filterkopf montiert ist und der ein Gehäuse umfasst mit wenigstens einem Einlass für das zu filtrierende Motoröl, der mit der Zuleitung kommuniziert, und wenigstens einem Auslass für das filtrierte Motoröl, der mit der Ableitung kommuniziert, und in dem ein Filterelement angeordnet ist, das den Einlass dicht vom Auslass trennt.

Ferner betrifft die Erfindung einen Wechselfilter eines Filtersystems für Motoröl einer Brennkraftmaschine, insbesondere nach einem der vorigen Ansprüche, der lösbar mittels einer Dreh- und/oder Steckverbindung an einem Filterkopf montierbar ist und der ein Gehäuse umfasst mit wenigstens einem Einlass für zu filtrierendes Motoröl und wenigstens einem Auslass für filtriertes Motoröl und in dem ein Filterelement angeordnet ist, das den Einlass dicht vom Auslass trennt.

### Stand der Technik

Vom Markt her bekannte Filtersysteme für Motoröl einer Brennkraftmaschine weisen einen Filterkopf auf, welcher eine Zuleitung für zu filtrierendes Motoröl und eine Ableitung für filtriertes Motoröl aufweist. Ein Wechselfilter ist lösbar an dem Filterkopf angeschraubt. Der Wechselfilter umfasst ein Gehäuse mit einem Einlass für das zu filtrierende Motoröl und einem Auslass für das filtrierte Motoröl. Bei montiertem Wechselfilter kommuniziert der Einlass mit der Zuleitung im Filterkopf und der Auslass kommuniziert mit der Ableitung im Filterkopf. In dem Wechselfilter ist ein Filterelement angeordnet, das den Einlass dicht vom Auslass trennt und das von Motoröl zur Filtrierung durchströmbar ist. Ist der Wechselfilter schräg oder senkrecht von oben am Filterkopf montiert, kann im Filter befindliches Restöl bei der Demontage des Wechselfilters unerwünscht in die Umgebung, insbesondere in einen Motorraum, gelangen.

Die Schrift FR 2 911 797 A1 zeigt eine Filterpatrone für Flüssigkeiten, die ein äußeres Gehäuse umfasst, das ein inneres Volumen begrenzt, das ein Filterelement enthält, das das innere Volumen in einen oberstromigen Raum und einen unterstromigen Raum teilt, wobei das Gehäuse einen Boden umfasst, der mindestens einen Flüssigkeitseingang begrenzt, der mit dem oberstromigen Raum verbunden ist, und einen Flüssigkeitsausgang, der mit dem unterstromigen Raum verbunden ist, wobei das Gehäuse angepasst ist, um auf eine Fassung montiert zu werden.

Der Erfindung liegt die Aufgabe zugrunde, ein Filtersystem und einen Wechselfilter der eingangs genannten Art zu gestalten, bei dem mit dem Wechselfilter zusätzlich eine Ölverteilung im Filterkopf gesteuert werden kann. Insbesondere soll eine tropffreie Demontage des Wechselfilters ermöglicht werden.

### Offenbarung der Erfindung

Diese Aufgabe wird erfindungsgemäß dadurch gelöst, dass der Filterkopf eine Ölnebenleitung umfasst und der Wechselfilter ein Ablaufsteuerelement aufweist, das abhängig von einer Betriebs- und/oder Montagebedingung die Ölnebenleitung automatisch verschließt oder freigibt. Insbesondere ist das Ablaufsteuerelement derart an dem (übrigen) Wechselfilter befestigt, dass es bei einer Demontage des Wechselfilters von dem Filterkopf zusammen mit dem Wechselfilter von dem Filterkopf entfernt wird. Es handelt sich also insbesondere um ein wechselfilterfestes Ablaufsteuerelement.

Erfindungsgemäß ist also eine Ölnebenleitung vorgesehen, die vorzugsweise mit der Zuleitung oder mit der Ableitung verbunden ist. Mit dem Ablaufsteuerelement wird abhängig von der Betriebsbedingung und/oder der Montagebedingung ein Ölfluss in die Ölnebenleitung oder aus dieser heraus gesteuert. Zur Charakterisierung der Betriebsbedingung können insbesondere eine Öltemperatur und/oder ein Ölstand herangezogen werden. Die Montagebedingung bezieht sich auf den Montagezustand des Wechselfilters am Filterkopf, nämlich ob dieser vollständig und korrekt am Filterkopf montiert ist. Bei der Verwendung eines nicht geeigneten Wechselfilters, welcher das erforderliche Ablaufsteuerelement nicht aufweist, oder bei falscher oder unvollständiger Montage wird der Ölfluss in der Ölnebenleitung nicht in erforderlicher Weise gesteuert, um vorzugsweise eine Störung der Brennkraftmaschine zu verhindern. Der Wechselfilter kann mit dem Ablaufsteuerelement einfach modular aufgebaut sein, so dass das Ablaufsteuerelement gemeinsam mit dem Wechselfilter ausgetauscht und gewartet werden kann.

Bei einer vorteilhaften Ausführungsform kann die Ölnebenleitung ein Ölablauf sein zur Abführung von Motoröl aus der Zuleitung oder der Ableitung bei einer Demontage des Wechselfilters und das Ablaufsteuerelement kann wenigstens ein Verschlusselement aufweisen, das bei montiertem Wechselfilter den Ölablauf verschließt und bei der Demontage des Wechselfilters den Ölablauf automatisch freigibt. Bei montiertem Wechselfilter verschließt das Verschlusselement den Ölablauf, so dass auch bei einem Stillstand der Brennkraftmaschine der Ölkreislauf nicht leer läuft. Der Ölablauf kann insbesondere zur Ölwanne führen, welche am tiefsten Punkt der Brennkraftmaschine angeordnet ist. Sobald der Wechselfilter vom Filterkopf demontiert wird, gibt das Verschlusselement automatisch eine entsprechende Öffnung des Ölablaufs frei. Das im Filterkopf, insbesondere in der Zuleitung oder der Ableitung, vorhandene Restöl kann so über den Ölablauf abfließen. Auf diese Weise ist eine tropffreie Demontage des Wechselfilters möglich.

Bei einer alternativen vorteilhaften Ausführungsform kann die Ölnebenleitung mit einem Ölnebenkreislauf verbunden sein und das Ablaufsteuerelement kann wenigstens ein abhängig von der Betriebsbedingung steuerbares Verschlusselement aufweisen, das einen Ölfluss in den Ölnebenkreislauf automatisch steuert. Der Ölnebenkreislauf kann insbesondere einen Ölkühler enthalten. Auf diese Weise kann mit dem Ablaufsteuerelement abhängig von den Betriebsbedingungen ein Ölnebenkreislauf automatisch zu- oder abgeschaltet werden. Bei Nichtvorhandensein des korrekten Ablaufsteuerelements bleibt der Ölnebenkreislauf offen, so dass Störungen, insbesondere durch Überhitzung des Motoröls, verhindert werden.

Vorteilhafterweise kann das Ablaufsteuerelement eine Steuereinheit, insbesondere einen Schwimmer oder ein Wachsdehnelement, aufweisen, die mit dem Verschlusselement zur Betätigung desselben funktional verbunden ist. Mit der Steuereinheit kann die Betriebsbedingung erfasst und das Verschlusselement entsprechend betätigt werden. Das Ablaufsteuerelement mit der Steuereinheit und dem Verschlusselement kann modular aufgebaut sein und einfach beim Ausbau des Wechselfilters mit ausgetauscht werden. Auf diese Weise wird der Montage- und Wartungsaufwand reduziert.

Erfindungsgemäß weist das Ablaufsteuerelement einen Schaft auf, an dem das Verschlusselement angeordnet ist, und der Filterkopf kann eine Schaftaufnahme aufweisen, in die der Schaft bei montiertem Wechselfilter eingesteckt ist, derart, dass das Verschlusselement die Ölnebenleitung wenigstens teilweise verschließen kann. Der Schaft kann einfach bei der Montage des Wechselfilters in die Schaftaufnahme eingesteckt werden, um das Verschlusselement an einer Öffnung der Ölnebenleitung zu platzieren.

Erfindungsgemäß weist der Auslass oder der Einlass des Wechselfilters eine zu einer Dreh-/Steckachse der Dreh- und/oder Steckverbindung koaxiale Durchlassöffnung auf und der Schaft ist koaxial zur Dreh-/Steckachse angeordnet. Auf diese Weise kann der Schaft einfach beim Öffnen oder Schließen der Dreh- und/oder Steckverbindung, insbesondere beim Einschrauben oder Herausschrauben des Wechselfilters, in der Schaftaufnahme geführt werden. Der Schaft ist durch die Durchlassöffnung hindurchgeführt.

Ferner kann vorteilhafterweise der Schaft mit einem Mittelrohr des Wechselfilters einteilig oder zweiteilig, insbesondere mittels einer Rastverbindung, verbunden sein. Der Schaft kann vorteilhafterweise einteilig mit dem Mittelrohr ausgeführt sein und durch die Durchlassöffnung im Deckel des Gehäuses des Wechselfilters hindurchgeführt werden. Ein einteiliges Bauteil ist einfach und kostengünstig herstellbar und stabil. Eine separate Befestigung des Schafts ist nicht erforderlich. Alternativ können der Schaft und das Mittelrohr zweiteilig ausgeführt sein. Insbesondere kann der Schaft mittels einer Rast- oder Clipsverbindung am Mittelrohr befestigt werden. Auf diese Weise kann der Schaft vom Wechselfiltergehäuse getrennt und bei einem Austausch des Wechselfilters wieder verwendet werden. Dies ist insbesondere dann von Vorteil, wenn der Schaft ein komplexes Ablaufsteuerelement, insbesondere ein Temperatursensor oder einen Schwimmer, aufweist.

Ferner kann Vorteilhafterweise der Schaft ein Rohr sein, dessen Wand eine Vielzahl von Öffnungen aufweist. Auf diese Weise kann Motoröl in einen Innenraum des Schafts gelangen und aus diesem heraus fließen. Der Innenraum des Schafts kann insbesondere mit dem Innenraum des Filterelements verbunden sein. So kann die Schaftaufnahme mit dem Schaft als Teil der Zuleitung oder der Ableitung im Filterkopf wirken.

Bei einer weiteren vorteilhaften Ausführungsform kann der Wechselfilter räumlich von oben an dem Filterkopf montiert sein. Der Wechselfilter kann so Platz sparend und einfach von außen zugänglich oben an der Brennkraftmaschine montiert werden. Durch die erfindungsgemäße Ablaufsteuerung wird einfach verhindert, dass beim Entfernen des Wechselfilters Restöl aus dem Filterkopf entweichen kann.

Die Aufgabe wird erfindungsgemäß ferner dadurch gelöst, dass der Wechselfilter ein Ablaufsteuerelement aufweist, das bei dem an dem Filterkopf montierten Wechselfilter abhängig von den Betriebs- und/oder Montagebedingungen eine Ölnebenleitung des Filterkopfs automatisch verschließen oder freigeben kann. Die oben im Zusammenhang mit dem erfindungsgemäßen Filtersystem aufgezeigten Vorteile und Merkmale gelten für den erfindungsgemäßen Wechselfilter entsprechend.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen:
- Figur 1: schematisch einen Halbschnitt eines Filtersystems einer Brennkraftmaschine mit einem austauschbaren Wechselfilter, der ein Ablaufsteuerelement für einen Ölablauf in einem Filterkopf aufweist;

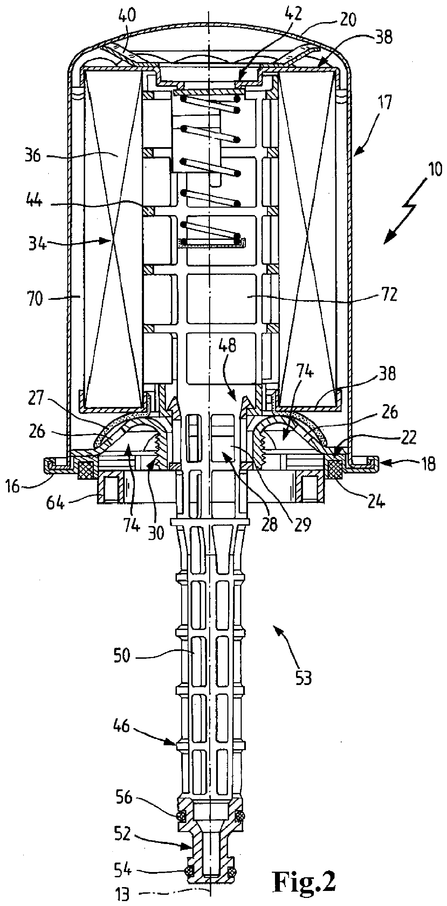

- Figur 2: schematisch einen Längsschnitt des Wechselfilters aus der Figur 1;

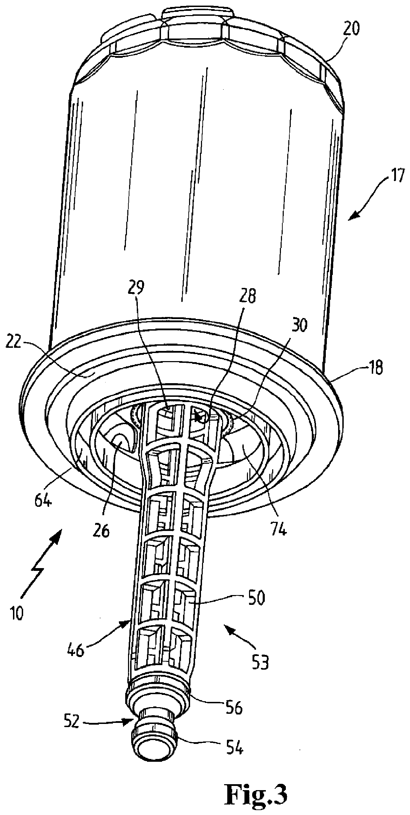

- Figur 3: eine isometrische Darstellung des Wechselfilters aus den Figuren 1 und 2.

In den Figuren sind gleiche Bauteile mit gleichen Bezugszeichen versehen.

### Ausführungsform(en) der Erfindung

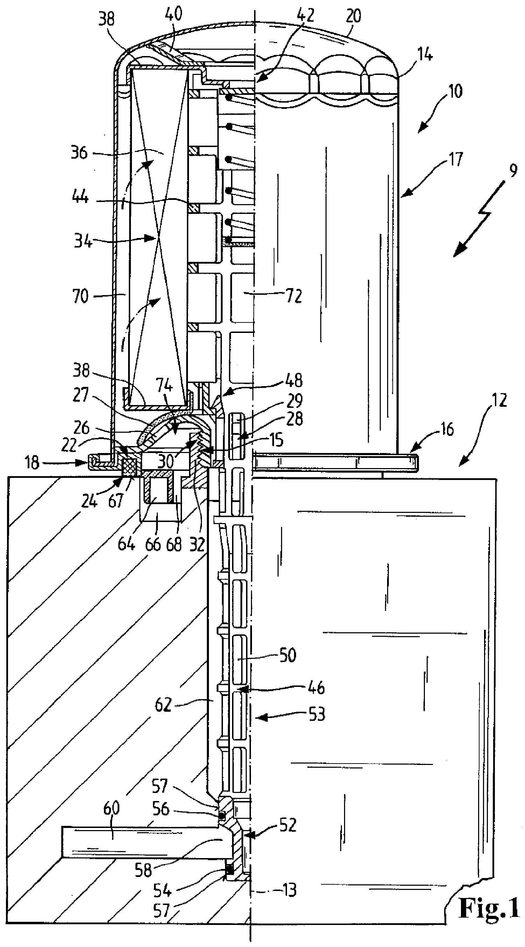

In Figur 1 ist ein Ausschnitt eines Filtersystems 9 für Motoröl einer ansonsten nicht gezeigten Brennkraftmaschine in einem längsseitigen Halbschnitt dargestellt. Ein Wechselfilter 10 ist von oben an einen Filterkopf 12 des Filtersystems 9 angeschraubt. Der Wechselfilter 10 ist insgesamt zu einer Symmetrieachse 13 symmetrisch, welche auch eine Dreh-/Steckachse für eine Schraubverbindung 15 des Wechselfilters 10 mit dem Filterkopf 12 bildet.

Der Wechselfilter 10 verfügt über einen Topf 14 und einen Deckel 16. Der Topf 14 bildet gemeinsam mit dem Deckel 16 ein Gehäuse 17, welches im Wesentlichen die Außengeometrie des Wechselfilters 10 darstellt. Der Topf 14 ist über eine flüssigkeitsdichte Bördelverbindung 18 mit dem Deckel 16 verbunden. Der Topf 14 verfügt über einen geschlossenen zylindrischen Umfangsbereich, welcher im unteren Bereich des Topfes 14 in einen Topfboden 20 übergeht. Im Bereich der Bördelverbindung 18 ist eine Dichtungssicke 22 angeordnet, in welcher eine Dichtung 24 platziert ist.

In dem Deckel 16 sind mehrere, verteilt angeordnete Einlassöffnungen 26 vorgesehen, durch welche das zu reinigende Motoröl in den Wechselfilter 10 einströmen kann. Die Einlassöffnungen 26 sind auf ihrer der Innenseite des Topfs 14 zugewandten Seite mit einer Rücklaufsperrmembran 27 abgedeckt. Weiterhin verfügt der Deckel 16 über einen zentral angeordneten, rohrstutzenförmigen Auslass 28 mit einer zur Symmetrieachse 13 koaxialen Auslassöffnung 29. Der Auslass 28 weist an seiner radial äußeren Umfangsseite ein Außengewinde 30 zur Verschraubung des Wechselfilters 10 mit einem Stutzen 32 mit einem entsprechenden Innengewinde auf. Das Außengewinde 30 und das Innengewinde sind Teil der Schraubverbindung 15. Der Stutzen 32 ist Teil des Filterkopfes 12.

Im Inneren des Gehäuses 17 ist ein Filterelement 34 derart angeordnet, dass die Einlassöffnungen 26 dichtend von dem Auslass 28 getrennt sind. Das Filterelement 34 verfügt hierzu über ein Filtermedium 36, welches zickzackförmig gefaltet und sternförmig geschlossen ist. An den stirnseitigen Enden des Filtermediums 36 sind Endscheiben 38 angeordnet.

Die dem Topfboden 20 zugewandte Endscheibe 38 ist über Stützelemente 40 gegen den Topfboden 20 abgestützt.

In einer zur Symmetrieachse 13 koaxialen Öffnung in der dem Topfboden 20 zugewandten Endscheibe 38 ist ein hier nicht weiter interessierendes Umgehungsventil 42 angeordnet, welches in das Innere des Filterelementes 34 hineinragt.

Im Inneren des Filterelements 34 befindet sich ein skelettartiges Mittelrohr 44, auf welches das Filterelement 34 aufgesteckt ist. Das Mittelrohr 44 ist koaxial zur Symmetrieachse 13 und erstreckt sich zwischen den beiden Endscheiben 38.

Durch die Auslassöffnung 29 führt ein zur Symmetrieachse 13 koaxialer, rohrartiger Schaft 46 hindurch. Der Schaft 46 ist an einem Ende etwa auf Höhe der oberen Endscheibe 38 über eine Clipsverbindung 48 mit dem Mittelrohr 44 verbunden. Eine Umfangswand des Schafts 46 weist eine Vielzahl von Öffnungen 50 auf, durch die Motoröl aus dem Innenraum des Schafts 46 heraus gelangen kann. An dem freien Ende des Schafts 46 ist ein becherförmiges Verschlusselement 52 ausgebildet, dessen offene Seite zum Deckel 16 des Wechselfilters 10 zeigt. Die Umfangswand des Verschlusselements 52 ist mehrfach abgestuft. Der größte Durchmesser des Verschlusselements 52 befindet sich an der offenen Seite. Der Schaft 46 und das Verschlusselement 52 bilden ein Ablaufsteuerelement 53 des Wechselfilters 10.

Jeweils in der Nähe der Stirnseiten des Verschlusselements 52 ist in der radial äußeren Umfangsseite eine Umfangsnut mit einer jeweiligen Ringdichtung 54 und 56 angeordnet. Bei angeschraubtem Wechselfilter 10 dichten die Ringdichtungen 54 und 56 eine Verbindungsöffnung 58 zwischen einem Ölablauf 60 und einer Schaftaufnahme 62 des Filterkopfs 12 gegen entsprechende Dichtungsflächen 57 ab.

Die Schaftaufnahme 62 ist Teil einer im Weiteren nicht gezeigten Ableitung für filtriertes Motoröl. Die Schaftaufnahme 62 ist im Wesentlichen koaxial zur Symmetrieachse 13. Bei montiertem Wechselfilter 10 ist der Schaft 46 des Wechselfilters 10 in die Schaftaufnahme 62 eingesteckt, derart, dass mit dem Verschlusselement 52 die Verbindungsöffnung 58 zum Ölablauf 60 geschlossen ist.

Der Ölablauf 60 führt in hier nicht weiter interessierender Weise in eine in der Figur 1 nicht gezeigte Ölwanne.

Am Deckel 16 des Wechselfilters 10 ist radial innerhalb der Dichtung 24 ein zur Symmetrieachse 13 koaxialer Ringvorsprung 64 angeordnet, welcher ein U-förmiges Profil hat. Die offene Seite des U-förmigen Profils zeigt in axialer Richtung vom Topfboden 20 weg. Der Ringvorsprung 64 greift bei montiertem Wechselfilter 10 in eine entsprechende ringförmige Zuleitungsnut 66 im Filterkopf 12 ein. Die Zuleitungsnut 66 befindet sich ebenfalls radial innerhalb der Dichtung 24. Die Dichtung 24 stützt sich an einer entsprechenden Dichtungsfläche 67 des Filterkopfs 12 ab, welche die Zuleitungsnut 66 radial außen umgibt. Die Zuleitungsnut 66 ist Teil einer Zuleitung für zu filtrierendes Motoröl im Filterkopf 12, welche im Weiteren nicht gezeigt ist.

Zwischen der radial inneren Seitenwand der Zuleitungsnut 66 und der radialen inneren Außenwand des Ringvorsprungs 64 befindet sich ein Spalt 68, durch welchen das zu filtrierende Motoröl von der Zuleitungsnut 66 in den Anströmraum 74 im Deckel 16, und von dort aus in die Einlassöffnungen 26 gelangen kann.

Beim Betrieb der Brennkraftmaschine strömt zu filtrierendes Motoröl aus dem Motorölkreislauf in die Zuleitungsnut 66 der Zuleitung des Filterkopfs 12. Von dort strömt das Motoröl durch den Spalt 68 zum Anströmraum 74. Das Motoröl strömt durch die Einlassöffnungen 26 in das Gehäuse 17 zu einer radial äußeren Rohseite 70 des Filterelements 34.

Das zu filtrierende Motoröl durchströmt zur Filtrierung das Filtermedium 36 radial von außen nach innen zu einer Reinseite 72. Das filtrierte Motoröl gelangt durch die Öffnung des skelettartigen Mittelrohrs 44 in den Innenraum des Filterelements 34. Es strömt dem Innenraum des Schafts 46 zu und verlässt den Wechselfilter 10 durch den Auslass 28. Durch die Öffnungen 50 des Schafts 46 gelangt das filtrierte Motoröl in die Schaftaufnahme 62 und so in die Ableitung. Über die Ableitung gelangt das filtrierte Motoröl zurück in den Motorölkreislauf.

Zur Demontage des Wechselfilters 10 wird dieser axial zur Symmetrieachse 13 vom Filterkopf 12 abgeschraubt. Dabei wird der Schaft 46 axial zur Symmetrieachse 13 aus der Schaftaufnahme 62 heraus gezogen und das Verschlusselement 52 von den entsprechenden Dichtungsflächen 57 der Verbindungsöffnung 58 des Ölablaufs 60 abgezogen. Das Verschlusselement 52 gibt so automatisch die Verbindungsöffnung 58 zum Ölablauf 60 frei. Restöl, welches sich in der Ableitung befindet, kann über den Ölablauf 60 in die Ölwanne ablaufen.

Gleichzeitig wird beim Abschrauben des Wechselfilters 10 der Ringvorsprung 64 aus der Zuleitungsnut 66 heraus bewegt. Das in dem Anströmraum 74 befindliche, noch zu filtrierende Restöl wird in der Zuleitungsnut 66 gesammelt.

Insgesamt gelangt so etwaiges in dem Anströmraum 74, in der Zuleitungsnut 66 und in der Ableitung 62 noch vorhandenes Restöl beim Abschrauben des Wechselfilters 10 nicht in die Umgebung, so dass eine tropffreie Demontage realisiert wird.

Zur Montage wird der Schaft 46 des Wechselfilters 10 soweit in die Schaftaufnahme 62 gesteckt, dass das Außengewinde 30 des Auslasses 28 am Innengewinde des Stutzens 32 anliegt. Anschließend wird der Wechselfilter 10 angeschraubt. Dabei verschließt das Verschlusselement 52 automatisch die Verbindungsöffnung 58 zwischen der Schaftaufnahme 62 und dem Ölablauf 60. Im Endmontagezustand liegt die Dichtung 24 dicht an der Dichtfläche 67 des Filterkopfs 12 an.

Bei allen oben beschriebenen Ausführungsbeispielen eines Filtersystems 9 und eines Wechselfilters 10 sind unter anderem folgende Modifikationen möglich:
Der Wechselfilter 10 kann auch so ausgestaltet sein, dass sich die Reinseite radial außerhalb des Filtermediums 36 befindet und die Rohseite innerhalb des Filtermediums angeordnet ist, so dass das zu filtrierende Motoröl radial von innen nach außen strömt. In diesem Fall ist die Schaftaufnahme 62 Teil der Zuleitung und eine der Zuleitungsnut 66 entsprechende Ableitungsnut Teil der Ableitung. Der Ölablauf 60 ist über die Verbindungsöffnung 58 mit der Zuleitung verbunden. Das Restöl in dem Anströmraum 74 wird bei der Demontage des Wechselfilters 10 in der Zuleitungsnut 66 aufgefangen. Die Rücklaufsperrmembranen sind in diesem Fall durch andersartige, geeignete Rücklaufsperreinrichtungen zu ersetzen.

Das Verschlusselement 52 kann auch weitere Steuerfunktionen aufweisen. Beispielsweise kann das Verschlusselement mit einer Steuereinheit, beispielsweise einem Schwimmer oder einem Wachsdehnelement, ausgestattet sein, mit dem der Verschluss der Verbindungsöffnung 58 abhängig von Betriebsbedingungen, beispielsweise einer Motoröltemperatur und/oder einem Motorölstand in der Ablaufleitung, gesteuert werden kann.

Zusätzlich zu dem Verschlusselement 52 kann im oder am Schaft 46 eine weitere Steuereinheit mit einem Verschlusselement zum automatischen verschließen oder freigeben einer weiteren Ölnebenleitung, beispielsweise eines separaten Ölkühlerkreislaufs, vorgesehen sein.

Der Wechselfilter 10 kann statt von oben an den Filterkopf 12 auch von schräg oben an diesem montiert sein.

Es kann auch ein andersartiges Filterelement 34 vorgesehen sein, welches statt des zickzackförmig gefalteten Filtermediums 36 ein andersartig geformtes Filtermedium aufweist.

Der Wechselfilter 10 kann statt mittels der Schraubverbindung 15 auch mit einer andersartigen Dreh- und/oder Steckverbindung, beispielsweise einer bajonettartigen Verbindung, lösbar mit dem Filterkopf 12 verbunden sein.

Der Schaft 46 kann statt zweiteilig über die Clipsverbindung 48 auch einteilig mit dem Mittelrohr 44 verbunden sein.

Der Schaft 46 kann statt koaxial auch exzentrisch zur Symmetrieachse 13 angeordnet und mit einem Ende beispielsweise über eine kardanartig wirkende Verbindung vorzugsweise an dem Gehäuse 17 des Wechselfilters 10 befestigt sein.

## Patentansprüche

1. Filtersystem (9) für Motoröl einer Brennkraftmaschine, insbesondere eines Kraftfahrzeugs, mit einem Filterkopf (12), welcher eine Zuleitung (66) für zu filtrierendes Motoröl und eine Ableitung (62) für filtriertes Motoröl aufweist, und einem Wechselfilter (10), welcher lösbar mittels einer Dreh- und/oder Steckverbindung (15) an dem Filterkopf (12) montiert ist und der ein Gehäuse (17) umfasst mit wenigstens einem Einlass (26) für das zu filtrierende Motoröl, der mit der Zuleitung (66) kommuniziert, und wenigstens einem Auslass (28) für das filtrierte Motoröl, der mit der Ableitung (62) kommuniziert, und in dem ein Filterelement (34) angeordnet ist, das den Einlass (26) dicht vom Auslass (28) trennt, wobei der Filterkopf (12) eine Ölnebenleitung (60) umfasst und der Wechselfilter (10) ein Ablaufsteuerelement (53) aufweist, das abhängig von einer Betriebs- und/oder Montagebedingung die Ölnebenleitung (60) automatisch verschließt oder freigibt, wobei das Ablaufsteuerelement (53) einen Schaft (46) aufweist, an dem das Verschlusselement (52) angeordnet ist, und der Filterkopf (12) eine Schaftaufnahme (62) aufweist, in die der Schaft (46) bei montiertem Wechselfilter (10) eingesteckt ist, derart, dass das Verschlusselement (52) die Ölnebenleitung (60) wenigstens teilweise verschließen kann, wobei der Auslass (28) oder der Einlass (26) des Wechselfilters (10) eine zu einer Dreh-/ Steckachse (13) der Dreh- und/oder Steckverbindung (15) koaxiale Durchlassöffnung (29) aufweist und der Schaft (46) koaxial zur Dreh-/Steckachse (13) angeordnet ist, **dadurch gekennzeichnet, dass** der Schaft (46) durch die Durchlassöffnung (29) hindurchführt ist.

2. Filtersystem nach Anspruch 1, **dadurch gekennzeichnet, dass** die Ölnebenleitung ein Ölablauf (60) ist zur Abführung von Motoröl aus der Zuleitung oder der Ableitung (62) bei einer Demontage des Wechselfilters (10) und das Ablaufsteuerelement (53) wenigstens ein Verschlusselement (52) aufweist, das bei montiertem Wechselfilter (10) den Ölablauf (60) verschließt und bei der Demontage des Wechselfilters (10) den Ölablauf (60) automatisch freigibt.

3. Filtersystem nach Anspruch 1, **dadurch gekennzeichnet, dass** die Ölnebenleitung mit einem Ölnebenkreislauf verbunden ist und das Ablaufsteuerelement wenigstens ein abhängig von Betriebsbedingung, insbesondere Öltemperatur und/oder Ölstand, steuerbares Verschlusselement aufweist, das einen Ölfluss in den Ölnebenkreislauf automatisch steuert.

4. Filtersystem nach einem der vorigen Ansprüche, **dadurch gekennzeichnet, dass** das Ablaufsteuerelement eine Steuereinheit, insbesondere einen Schwimmer oder ein Wachsdehnelement, aufweist, die mit dem Verschlusselement zur Betätigung desselben funktional verbunden ist.

5. Filtersystem nach einem der vorigen Ansprüche, **dadurch gekennzeichnet, dass** der Schaft (46) mit einem Mittelrohr (44) des Wechselfilters (10) einteilig oder zweiteilig, insbesondere mittels einer Rastverbindung (48), verbunden ist.

6. Filtersystem nach einem der vorigen Ansprüche, **dadurch gekennzeichnet, dass** der Schaft (46) ein Rohr ist, dessen Wand eine Vielzahl von Öffnungen (50) aufweist.

7. Filtersystem nach einem der vorigen Ansprüche, **dadurch gekennzeichnet, dass** der Wechselfilter (10) räumlich von oben an dem Filterkopf (12) montiert ist.

8. Wechselfilter (10) eines Filtersystems (9) für Motoröl einer Brennkraftmaschine, insbesondere nach einem der vorigen Ansprüche, der lösbar mittels einer Dreh- und/ oder Steckverbindung (15) an einem Filterkopf (12) montierbar ist und der ein Gehäuse (17) umfasst mit wenigstens einem Einlass (26) für zu filtrierendes Motoröl und wenigstens einem Auslass (28) für filtriertes Motoröl und in dem ein Filterelement (34) angeordnet ist, das den Einlass (26) dicht vom Auslass (28) trennt, wobei der Wechselfilter (10) ein Ablaufsteuerelement (53) aufweist, das bei dem an dem Filterkopf (12) montierten Wechselfilter (10) abhängig von den Betriebs- und/oder Montagebedingungen eine Ölnebenleitung (60) des Filterkopfs (12) automatisch verschließen oder freigeben kann, wobei das Ablaufsteuerelement (53) einen Schaft (46) aufweist, an dem das Verschlusselement (52) angeordnet ist, wobei der Auslass (28) oder der Einlass (26) des Wechselfilters (10) eine zu einer Dreh-/Steckachse (13) der Dreh- und/oder Steckverbindung (15) koaxiale Durchlassöffnung (29) aufweist und der Schaft (46) koaxial zur Dreh-/Steckachse (13) angeordnet ist, **dadurch gekennzeichnet, dass** der Schaft (46) durch die Durchlassöffnung (29) hindurchführt ist.

## Claims

1. Filter system (9) for engine oil of an internal combustion engine, in particular of a motor vehicle, with a filter head (12), which features a supply line (66) for engine oil to be filtered, and a discharge line (62) for filtered engine oil, and with a spin-on filter (10), which is detachably mounted to the filter head (12) by means of a rotary connection and/or plug-in connection (15) and which comprises a housing (17) with at least one inlet (26) for engine oil to be filtered that communicates with the supply line (66), and at least one outlet (28) for the filtered engine oil that communicates with the discharge line (62), and in which is disposed a filter element (34) that separates the inlet (26) sealingly from the outlet (28), wherein the filter head (12) comprises a secondary oil line (60) and the spin-on filter (10) features a discharge control element (53) which, depending on an operating and/or mounting condition, closes or opens the secondary oil line (60) automatically, wherein the discharge control element (53) features a shaft (46) at which the closing element (52) is disposed, and the filter head (12) features a shaft receptacle (62) into which the shaft (46) is inserted when the spin-on filter (10) is mounted, in such a way that the closing element (52) can close the secondary oil line (60) at least partially, wherein the outlet (28) or the inlet (26) of the spin-on filter (10) features a coaxial inlet aperture (29) relative to a rotational axis/connector axis (13) of the rotary connection and/or plug-in connection (15) and the shaft (46) is disposed coaxially relative to the rotational axis/connector axis (13), **characterized in that** the shaft (46) is passing through the inlet aperture (29).

2. Filter system according to claim 1, **characterized in that** the secondary oil line is an oil drain (60) for discharging engine oil from the supply line or the discharge line (62) during dismounting of the spin-on filter (10) and that the discharge control element (53) features at least one closing element (52) which closes the oil drain (60) when the spin-on filter (10) is mounted and opens the oil drain (60) automatically when the spin-on filter (10) is dismounted.

3. Filter system according to claim 1, **characterized in that** the secondary oil line is connected to a secondary oil circuit and that the discharge control element features, depending on operating conditions, in particular oil temperature and/or oil level, at least one controllable closing element that controls automatically an oil flow into the secondary oil circuit.

4. Filter system according to one of the above claims, **characterized in that** the discharge control element features a control unit, in particular a float or a wax expansion element, that is functionally connected to the closing element for actuating the same.

5. Filter system according to one of the above claims, **characterized in that** the shaft (46) is connected to a central tube (44) of the spin-on filter (10) in one or two parts, in particular by means of a locking connection (48).

6. Filter system according to one of the above claims, **characterized in that** the shaft (46) is a tube, the wall of which features a plurality of openings (50).

7. Filter system according to one of the above claims, **characterized in that** the spin-on filter (10) is mounted spatially from above to the filter head (12).

8. Spin-on filter (10) for a filter system (9) for engine oil of an internal combustion engine, in particular according to one of the above claims, which can be mounted detachably to a filter head (12) by means of a rotary connection and/or plug-in connection (15) and which comprises a housing (17) with at least one inlet (26) for engine oil to be filtered and at least one outlet (28) for filtered engine oil and in which is disposed a filter element (34) that separates the inlet (26) sealingly from the outlet (28), wherein the spin-on filter (10) features a discharge control element (53) that can, depending on the operating and/or mounting conditions, close or open with the spin-on filter (10) mounted to the filter head (12) a secondary oil line (60) of the filter head (12) automatically, wherein the discharge control element (53) features a shaft (46) at which the closing element (52) is disposed, wherein the outlet (28) or the inlet (26) of the spin-on filter (10) features a coaxial inlet aperture (29) relative to a rotational axis/connector axis (13) of the rotary connection and/or plug-in connection (15) and the shaft (46) is disposed coaxially relative to the rotational axis/connector axis (13), **characterized in that** the shaft (46) is passing through the inlet aperture (29).

## Revendications

1. Système de filtre (9) pour huile de moteur d'un moteur à combustion interne, notamment d'un véhicule automobile, avec une tête de filtre (12) laquelle présente une conduite d'alimentation (66) pour l'huile de moteur à filtrer et une conduite d'évacuation (62) pour l'huile de moteur filtrée, et avec un filtre interchangeable (10) lequel est monté de manière détachable sur la tête de filtre (12) au moyen d'un raccord rotatif et/ou d'un raccord enfichable (15) et qui comprend un boîtier (17) avec au moins une entrée (26) pour l'huile de moteur à filtrer qui communique avec la conduite d'alimentation (66), et au moins une sortie (28) pour l'huile de moteur filtrée et qui communique avec la conduite d'évacuation (62), et dans lequel un élément filtrant (34) est disposé qui sépare l'entrée (26) de manière étanche de la sortie (28), la tête de filtre (12) comprenant une conduite d'huile auxiliaire (60) et le filtre interchangeable (10) présentant un élément de contrôle de l'écoulement (53) qui ferme ou ouvre automatiquement la conduite d'huile auxiliaire (60) en fonction d'une condition de fonctionnement et/ou de montage, l'élément de contrôle de l'écoulement (53) présentant une tige (46) sur laquelle est disposé l'élément de fermeture (52), et la tête de filtre (12) présentant un logement de tige (62) dans lequel la tige (46) est introduite lorsque le filtre interchangeable (10) est monté de sorte à ce que l'élément de fermeture (52) peut fermer la conduite d'huile auxiliaire (60) au moins partiellement, la sortie (28) ou l'entrée (26) du filtre interchangeable (10) présentant une ouverture de passage (29) coaxiale relative à un axe rotatif/axe enfichable (13) du raccord rotatif et/ou du raccord enfichable (15) et la tige (46) étant disposée de manière coaxiale relative à l'axe rotatif/axe enfichable (13), **caractérisé en ce que** la tige (46) est passée à travers l'ouverture de passage (29).

2. Système de filtre selon la revendication 1, **caractérisé en ce que** la conduite d'huile auxiliaire est une évacuation d'huile (60) pour évacuer l'huile de moteur de la conduite d'alimentation ou de la conduite d'évacuation (62) lors d'un démontage du filtre interchangeable (10) et que l'élément de contrôle de l'écoulement (53) présente au moins un élément de fermeture (52) qui ferme l'évacuation d'huile (60) lorsque le filtre interchangeable (10) est monté et qui ouvre automatiquement l'évacuation d'huile (60) lors du démontage du filtre interchangeable (10).

3. Système de filtre selon la revendication 1, **caractérisé en ce que** la conduite d'huile auxiliaire est reliée à un circuit d'huile auxiliaire et que l'élément de contrôle de l'écoulement présente au moins, en fonction du régime de fonctionnement, notamment température d'huile et/ou niveau d'huile, un élément de fermeture contrôlable qui contrôle automatiquement un flux d'huile dans le circuit d'huile auxiliaire.

4. Système de filtre selon l'une des revendications précédentes, **caractérisé en ce que** l'élément de contrôle de l'écoulement présente une unité de commande, notamment un flotteur ou un élément extensible en cire, qui est reliée de manière opérationnelle avec l'élément de fermeture pour actionner ce dernier.

5. Système de filtre selon l'une des revendications précédentes, **caractérisé en ce que** la tige (46) est reliée à un tube central (44) du filtre interchangeable (10) en une seule pièce ou en deux pièces, notamment au moyen d'un raccord à crans (48).

6. Système de filtre selon l'une des revendications précédentes, **caractérisé en ce que** la tige (46) est un tube dont la paroi présente une pluralité d'ouvertures (50).

7. Système de filtre selon l'une des revendications précédentes, **caractérisé en ce que** le filtre interchangeable (10) est monté spatialement d'en haut sur la tête de filtre (12).

8. Filtre interchangeable (10) d'un système de filtre (9) pour l'huile de moteur d'un moteur à combustion interne, notamment selon l'une des revendications précédentes, qui peut être monté de manière détachable sur une tête de filtre (12) au moyen d'un raccord rotatif et/ou d'un raccord enfichable (15) et qui comprend un boîtier (17) avec au moins une entrée (26) pour l'huile de moteur à filtrer et au moins une sortie (28) pour l'huile de moteur filtrée et dans lequel un élément filtrant (34) est disposé qui sépare l'entrée (26) de manière étanche de la sortie (28), le filtre interchangeable (10) présentant un élément de contrôle de l'écoulement (53) qui peut fermer ou ouvrir automatiquement avec le filtre interchangeable (10) monté sur la tête de filtre (12) une conduite d'huile auxiliaire (60) de la tête de filtre (12) en fonction d'une condition de fonctionnement et/ou de montage, l'élément de contrôle de l'écoulement (53) présentant une tige (46) sur laquelle est disposé l'élément de fermeture (52), la sortie (28) ou l'entrée (26) du filtre interchangeable (10) présentant une ouverture de passage (29) coaxiale relative à un axe rotatif/axe enfichable (13) du raccord rotatif et/ou du raccord enfichable (15) et la tige (46) étant disposée de manière coaxiale à l'axe rotatif/axe enfichable (13), **caractérisé en ce que** la tige (46) est passée à travers l'ouverture de passage (29).
